# EUROPEAN PATENT APPLICATION

(11) **EP 4 600 310 A1**
(43) Date of publication of application: **13.08.2025**
(21) Application number: 23874601.0
(22) Date of filing: 11.09.2023
(51) Int. Cl.: C08L 83/07, C08K 3/36, C08L 83/05, C08L 83/08

(54) **LIQUID ADDITION-CURABLE FLUOROSILICONE COMPOSITION, FLUOROSILICONE RUBBER, AND MOLDED ARTICLE**

(30) Priority: 07.10.2022 JP 2022162686; 21.10.2022 JP 2022169054
(71) Applicant: SHIN-ETSU CHEMICAL CO., LTD., Tokyo 1000005 (JP)
(72) Inventor: HARA Tatsuei, Annaka-shi, Gunma 379-0224 (JP); KATO Nobu, Annaka-shi, Gunma 379-0224 (JP)
(74) Representative: Schicker, Silvia
(86) International application number: PCT/JP2023/032998
(87) International publication number: WO 2024/075472

(57) **Abstract**

A first aspect of the present invention provides an addition-curable fluorosilicone composition that contains (A) a vinyl group-containing organopolysiloxane represented by the following general formula (1) and having a viscosity at 25°C of 100 to 500,000 mPa·s, (B) a branched organohydrogenpolysiloxane represented by the following formula (3) and having three or more silicon-bonded hydrogen atoms per molecule, in such an amount that the number of hydrogen atoms bonded to silicon atoms in component (B) is 0.5 to 10 per silicon-bonded vinyl group in the composition, (C) an addition reaction catalyst in a catalytic amount, and (D) a reinforcing silica filler surface-treated with an organosilicon compound represented by the following general formula (2) in an amount of 10 to 60 parts by mass per 100 parts by mass of component (A). The composition is in a liquid form at 23°C. Thus, a liquid addition-curable fluorosilicone composition that can have good curability, can retain mechanical strength, and is suitable for injection molding and the like can be provided.

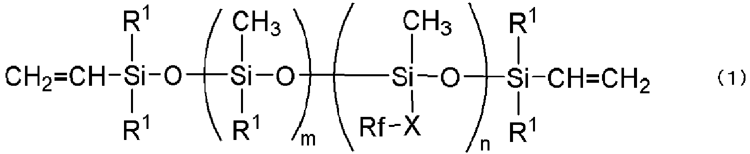

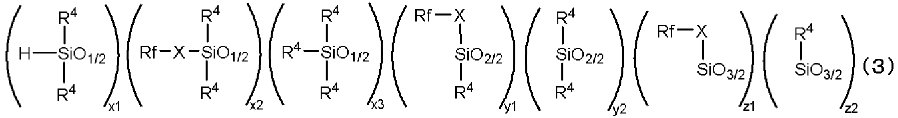

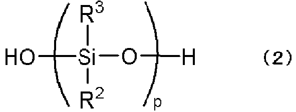

## Description

### TECHNICAL FIELD

The present invention relates to a liquid addition-curable fluorosilicone composition, a fluorosilicone rubber obtained by heating and curing the composition, and a molded article of the fluorosilicone rubber.

### BACKGROUND ART

Conventionally, addition-curable fluorosilicone rubber compositions have been used for rubber parts for aircrafts and vehicles, printer parts, and the like because cured products of the composition exhibit excellent resistance to gasoline and oil (Patent Document 1). In recent years, the cured products of addition-curable fluorosilicone rubber compositions have been considered to be used in mobile parts in view of sebum resistance and in sealing parts for fuel cell vehicles in view of acid resistance. The cured products of addition-curable fluorosilicone rubber compositions for use in these parts are required to have a low compression set and retain practical strength, that is, mechanical strength. In particular, there has been a demand for development of liquid addition-curable fluorosilicone rubber compositions with excellent productivity. For example, cast molding, compression molding, and injection molding that use molds are preferred as processing methods with excellent productivity. However, the liquid addition-curable fluorosilicone rubber compositions are unable to be used unless they have a viscosity that can be employed in these processing methods.

### CITATION LIST

### PATENT LITERATURE

Patent Document 1: JP 2013-047290 A

### SUMMARY OF INVENTION

### TECHNICAL PROBLEM

A first aspect of the present invention was made in view of the above circumstances and an object is to provide a liquid addition-curable fluorosilicone composition that can have good curability, can retain mechanical strength, and is suitable for injection molding and the like. Another object is to provide a fluorosilicone rubber obtained by thermal curing the composition, and a molded article of the fluorosilicone rubber.

A second aspect of the present invention was made in view of the above circumstances and an object is to provide a liquid addition-curable fluorosilicone composition that can have excellent storage stability while exhibiting very good curability, can provide a fluorosilicone rubber that can retain mechanical strength, and is suitable for processing with excellent productivity. Another object is to provide a fluorosilicone rubber obtained by curing the composition.

### SOLUTION TO PROBLEM

To achieve the object, the first aspect of the present invention provides an addition-curable fluorosilicone composition including:
(A) a vinyl group-containing organopolysiloxane represented by the following general formula (1) and having a viscosity at 25°C of 100 to 500,000 mPa·s, 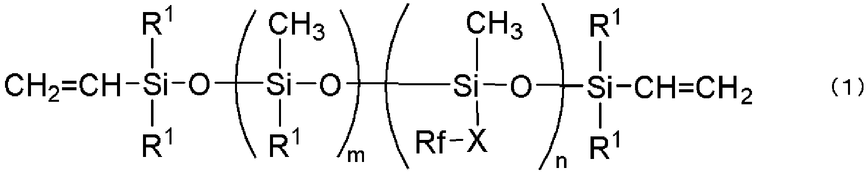 wherein R¹ is, independently of each other, a group selected from an alkyl group having 1 to 8 carbon atoms, an aryl group having 6 to 12 carbon atoms, and an aralkyl group having 7 to 12 carbon atoms; Rf is, independently of each other, a group selected from a perfluoroalkyl group having 1 to 10 carbon atoms and a perfluoropolyether group having 3 to 30 carbon atoms; X is a divalent organic group; m is an integer of 0 to 100; and n is an integer of 1 to 800, provided that 5 ≤ m + n ≤ 800;
(B) a branched organohydrogenpolysiloxane represented by the following formula (3) and having three or more silicon-bonded hydrogen atoms per molecule, 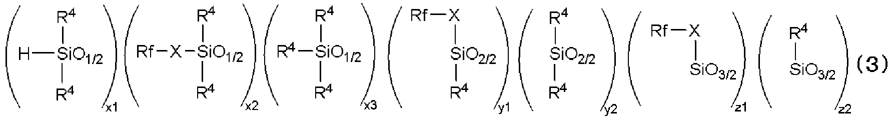 wherein R⁴ is, independently of each other, a group selected from an alkyl group having 1 to 8 carbon atoms, an aryl group having 6 to 12 carbon atoms, and an aralkyl group having 7 to 12 carbon atoms; Rf is, independently of each other, a group selected from a perfluoroalkyl group having 1 to 10 carbon atoms and a perfluoropolyether group having 3 to 30 carbon atoms; X is a divalent organic group; x1 is a number that satisfies 2 ≤ x1 ≤ 4; x2 is an integer that satisfies 0 ≤ x2 ≤ 20; x3 is an integer that satisfies 0 ≤ x3 ≤ 20; 0 ≤ x2 + x3 ≤ 20 is satisfied; y1 is an integer that satisfies 0 ≤ y1 ≤ 30; z1 is an integer that satisfies 0 ≤ z1 ≤ 10; y2 is an integer that satisfies 0 ≤ y2 ≤ 30; z2 is an integer that satisfies 0 ≤ z2 ≤ 10; and z1 + z2 > 0,
   in such an amount that a number of hydrogen atoms bonded to silicon atoms in component (B) is 0.5 to 10 per silicon-bonded vinyl group in the composition;
(C) an addition reaction catalyst in a catalytic amount; and
(D) a reinforcing silica filler surface-treated with an organosilicon compound represented by the following general formula (2), 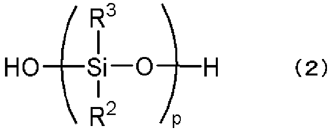 wherein R³ is, independently of each other, a group selected from an alkyl group having 1 to 8 carbon atoms, an aryl group having 6 to 12 carbon atoms, and an aralkyl group having 7 to 12 carbon atoms; R² is, independently of each other, a group defined for R³ or a 3,3,3-trifluoropropyl group, provided that at least one R² is a 3,3,3-trifluoropropyl group; and p is an integer that satisfies 1 ≤ p ≤ 20,
   in an amount of 10 to 60 parts by mass per 100 parts by mass of component (A),
wherein the addition-curable fluorosilicone composition is in a liquid form at 23°C.

The addition-curable fluorosilicone composition according to the first aspect of the present invention has good curability, retains mechanical strength, and is suitable for injection molding and the like.

The first aspect of the present invention also provides a fluorosilicone rubber which is a cured product of the addition-curable fluorosilicone composition.

The fluorosilicone rubber according to the first aspect of the present invention retains good mechanical strength.

The first aspect of the present invention also provides a fluorosilicone rubber molded article which is a molded product of the fluorosilicone rubber.

The fluorosilicone rubber molded article according to the first aspect of the present invention can be suitably used as rubber parts for aircrafts and vehicles, printer parts, and the like, because of its excellent resistance to gasoline and oil, and can be suitably used as mobile parts because of its sebum resistance and as seal parts for fuel cell vehicles because of its acid resistance.

To achieve the object, the second aspect of the present invention provides a liquid addition-curable fluorosilicone composition in a liquid form at 23°C, including:
(A') an alkenyl group-containing organopolysiloxane represented by the following general formula (1A) and having a viscosity at 25°C of 100 to 500,000 mPa·s, 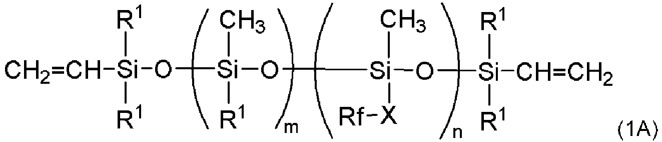 wherein R¹ is, independently of each other, a group selected from an alkyl group having 1 to 8 carbon atoms, an aryl group having 6 to 12 carbon atoms, and an aralkyl group having 7 to 12 carbon atoms; Rf is, independently of each other, a group selected from a perfluoroalkyl group having 1 to 10 carbon atoms and a perfluoropolyether group having 3 to 30 carbon atoms; X is a divalent organic group; m is an integer of 0 to 100; and n is an integer of 1 to 800, provided that 5 ≤ m + n ≤ 800;
(B') an organohydrogenpolysiloxane represented by the following general formula (2A) and having three to five silicon-bonded hydrogen atoms per molecule, 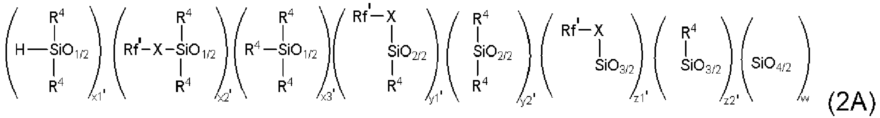 wherein R⁴ is, independently of each other, a group selected from an alkyl group having 1 to 8 carbon atoms, an aryl group having 6 to 12 carbon atoms, and an aralkyl group having 7 to 12 carbon atoms; Rf' is, independently of each other, a group selected from a perfluoroalkyl group having 1 to 10 carbon atoms and a perfluoropolyether group having 3 to 30 carbon atoms; X is a divalent organic group; x1' is an integer that satisfies 3 ≤ x1' ≤ 5; x2' and x3' are each an integer that satisfies 0 ≤ x2' + x3' ≤ 20; y1' is an integer that satisfies 0 ≤ y1' ≤ 30; y2' is an integer that satisfies 0 ≤ y2' ≤ 30; z1' is an integer that satisfies 0 ≤ z1' ≤ 10; z2' is an integer that satisfies 0 ≤ z2' ≤ 10; and w satisfies 0 < w ≤ 10, provided that x2', x3', y1', y2', z1', and z2' are not zero at the same time, in such an amount that a number of hydrogen atoms bonded to silicon atoms in component (B') is 0.5 to 10 per silicon-bonded alkenyl group in the composition;
(C') an addition reaction catalyst in a catalytic amount; and
(D') a reinforcing silica filler surface-treated with an organosilicon compound represented by the following general formula (3A), 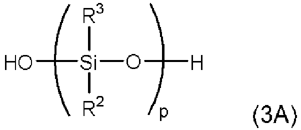 wherein R³ is, independently of each other, a group selected from an alkyl group having 1 to 8 carbon atoms, an aryl group having 6 to 12 carbon atoms, and an aralkyl group having 7 to 12 carbon atoms; R² is, independently of each other, a group defined for R³ or a 3,3,3-trifluoropropyl group, provided that at least one R² is a 3,3,3-trifluoropropyl group; and p is an integer that satisfies 1 ≤ p ≤ 20,
   in an amount of 10 to 60 parts by mass per 100 parts by mass of component (A').

The liquid addition-curable fluorosilicone composition according to the second aspect of the present invention has very good curability in that it cures quickly even at relatively low temperatures, has excellent storage stability, and can be cured to provide a fluorosilicone rubber that can retain mechanical strength. The liquid addition-curable fluorosilicone composition is suitable as a processing material with excellent productivity for cast molding, compression molding, injection molding, and the like and thus can contribute to improved productivity of molded articles.

The second aspect of the present invention also provides a fluorosilicone rubber which is a cured product of the addition-curable fluorosilicone composition according to the second aspect of the present invention.

The fluorosilicone rubber according to the second aspect of the present invention can exhibit low compression set and high mechanical strength.

### ADVANTAGEOUS EFFECTS OF INVENTION

The addition-curable fluorosilicone composition according to the first aspect of the present invention is in a liquid form and has very good curability in that it can cure quickly even at relatively low temperatures, and can provide a fluorosilicone rubber that can retain mechanical strength. The liquid addition-curable fluorosilicone composition is suitable as a material for cast molding, compression molding, and injection molding and thus can contribute to improved productivity of molded articles.

As described above, the liquid addition-curable fluorosilicone composition according to the second aspect of the present invention has very good curability in that it can cure quickly even at relatively low temperatures, has excellent storage stability, and can provide a fluorosilicone rubber that can retain mechanical strength. The liquid addition-curable fluorosilicone composition is suitable as a processing material with excellent productivity for cast molding, compression molding, injection molding, and the like and thus can contribute to improved productivity of molded articles.

The fluorosilicone rubber according to the second aspect of the present invention can exhibit low compression set and high mechanical strength.

### DESCRIPTION OF EMBODIMENTS

The inventors of the present invention have conducted elaborate studies in order to achieve the above objects and have found that a fluorosilicone rubber that can have good curability and can retain mechanical strength can be obtained by using a hydrogen polysiloxane with a specific structure in an addition-curable fluorosilicone composition in a liquid form at 23°C. Further, the present inventors have found that the liquid addition-curable fluorosilicone composition is suitable as a material for cast molding, compression molding, and injection molding. The findings have led to completion of the first aspect of the present invention. Specifically, a fluorosilicone composition, a fluorosilicone rubber, and a molded article of the fluorosilicone rubber as follows are provided.

Specifically, the first aspect of the present invention provides an addition-curable fluorosilicone composition including:
(A) a vinyl group-containing organopolysiloxane represented by the following general formula (1) and having a viscosity at 25°C of 100 to 500,000 mPa·s, 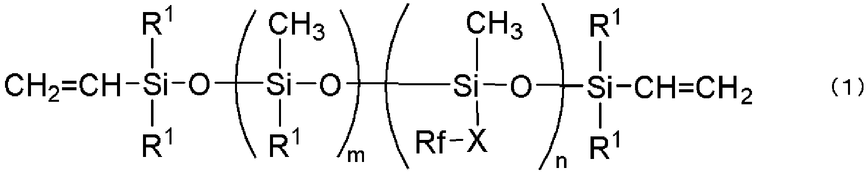 wherein R¹ is, independently of each other, a group selected from an alkyl group having 1 to 8 carbon atoms, an aryl group having 6 to 12 carbon atoms, and an aralkyl group having 7 to 12 carbon atoms; Rf is, independently of each other, a group selected from a perfluoroalkyl group having 1 to 10 carbon atoms and a perfluoropolyether group having 3 to 30 carbon atoms; X is a divalent organic group; m is an integer of 0 to 100; and n is an integer of 1 to 800, provided that 5 ≤ m + n ≤ 800;
(B) a branched organohydrogenpolysiloxane represented by the following formula (3) and having three or more silicon-bonded hydrogen atoms per molecule, 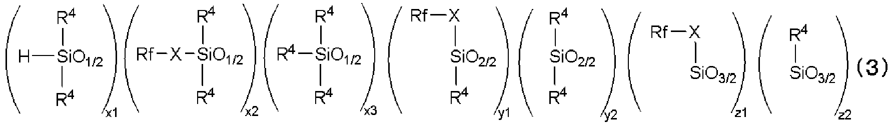 wherein R⁴ is, independently of each other, a group selected from an alkyl group having 1 to 8 carbon atoms, an aryl group having 6 to 12 carbon atoms, and an aralkyl group having 7 to 12 carbon atoms; Rf is, independently of each other, a group selected from a perfluoroalkyl group having 1 to 10 carbon atoms and a perfluoropolyether group having 3 to 30 carbon atoms; X is a divalent organic group; x1 is a number that satisfies 2 ≤ x1 ≤ 4; x2 is an integer that satisfies 0 ≤ x2 ≤ 20; x3 is an integer that satisfies 0 ≤ x3 ≤ 20; 0 ≤ x2 + x3 ≤ 20 is satisfied; y1 is an integer that satisfies 0 ≤ y1 ≤ 30; z1 is an integer that satisfies 0 ≤ z1 ≤ 10; y2 is an integer that satisfies 0 ≤ y2 ≤ 30; z2 is an integer that satisfies 0 ≤ z2 ≤ 10; and z1 + z2 > 0,
   in such an amount that a number of hydrogen atoms bonded to silicon atoms in component (B) is 0.5 to 10 per silicon-bonded vinyl group in the composition;
(C) an addition reaction catalyst in a catalytic amount; and
(D) a reinforcing silica filler surface-treated with an organosilicon compound represented by the following general formula (2), 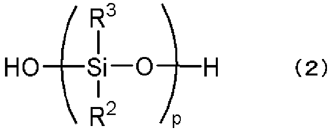 wherein R³ is, independently of each other, a group selected from an alkyl group having 1 to 8 carbon atoms, an aryl group having 6 to 12 carbon atoms, and an aralkyl group having 7 to 12 carbon atoms; R² is, independently of each other, a group defined for R³ or a 3,3,3-trifluoropropyl group, provided that at least one R² is a 3,3,3-trifluoropropyl group; and p is an integer that satisfies 1 ≤ p ≤ 20,
   in an amount of 10 to 60 parts by mass per 100 parts by mass of component (A),
wherein the addition-curable fluorosilicone composition is in a liquid form at 23°C.

It should be noted that the fluorosilicone composition according to the first aspect of the present invention contains, as a main agent, a linear polysiloxane having a repeating structure of diorganosiloxane units having a fluoroalkyl group as a main chain. On the other hand, a general dimethyl silicone composition includes, as a main agent, a linear dimethylpolysiloxane having a repeating structure of dimethylsiloxane units as a main chain. In this respect, the fluorosilicone composition according to the first aspect of the present invention is essentially different from the dimethyl silicone composition.

Furthermore, as described above, there has been a need for development of a liquid addition-curable fluorosilicone composition that can have very good curability while having excellent storage stability, and can provide a fluorosilicone rubber that can retain mechanical strength.

The inventors of the present invention have conducted elaborate studies on the above problem and have found that a liquid addition-curable fluorosilicone composition that can have good curability and can provide a fluorosilicone rubber that can retain mechanical strength can be obtained by using an alkenyl group-containing organopolysiloxane with a specific structure and a hydrogen polysiloxane with a specific structure in an addition-curable fluorosilicone composition in a liquid form at 23°C. Further, it has been found that the liquid addition-curable fluorosilicone composition is suitable as a material for cast molding, compression molding, and injection molding. Based on these findings, the inventors have completed the second aspect of the present invention.

Specifically, the second aspect of the present invention provides a liquid addition-curable fluorosilicone composition in a liquid form at 23°C, including:
(A') an alkenyl group-containing organopolysiloxane represented by the following general formula (1A) and having a viscosity at 25°C of 100 to 500,000 mPa·s, 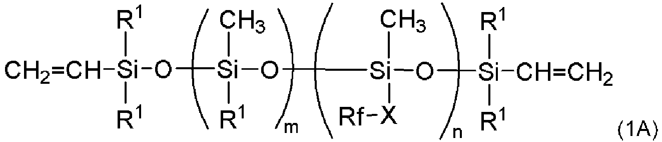 wherein R¹ is, independently of each other, a group selected from an alkyl group having 1 to 8 carbon atoms, an aryl group having 6 to 12 carbon atoms, and an aralkyl group having 7 to 12 carbon atoms; Rf is, independently of each other, a group selected from a perfluoroalkyl group having 1 to 10 carbon atoms and a perfluoropolyether group having 3 to 30 carbon atoms; X is a divalent organic group; m is an integer of 0 to 100; and n is an integer of 1 to 800, provided that 5 ≤ m + n ≤ 800;
(B') an organohydrogenpolysiloxane represented by the following general formula (2A) and having three to five silicon-bonded hydrogen atoms per molecule, 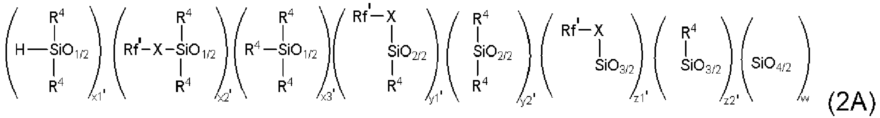 wherein R⁴ is, independently of each other, a group selected from an alkyl group having 1 to 8 carbon atoms, an aryl group having 6 to 12 carbon atoms, and an aralkyl group having 7 to 12 carbon atoms; Rf' is, independently of each other, a group selected from a perfluoroalkyl group having 1 to 10 carbon atoms and a perfluoropolyether group having 3 to 30 carbon atoms; X is a divalent organic group; x1' is an integer that satisfies 3 ≤ x1' ≤ 5; x2' and x3' are each an integer that satisfies 0 ≤ x2' + x3' ≤ 20; y1' is an integer that satisfies 0 ≤ y1' ≤ 30; y2' is an integer that satisfies 0 ≤ y2' ≤ 30; z1' is an integer that satisfies 0 ≤ z1' ≤ 10; z2' is an integer that satisfies 0 ≤ z2' ≤ 10; and w satisfies 0 < w ≤ 10, provided that x2', x3', y1', y2', z1', and z2' are not zero at the same time, in such an amount that a number of hydrogen atoms bonded to silicon atoms in component (B') is 0.5 to 10 per silicon-bonded alkenyl group in the composition;
(C') an addition reaction catalyst in a catalytic amount; and
(D') a reinforcing silica filler surface-treated with an organosilicon compound represented by the following general formula (3A), 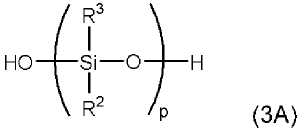 wherein R³ is, independently of each other, a group selected from an alkyl group having 1 to 8 carbon atoms, an aryl group having 6 to 12 carbon atoms, and an aralkyl group having 7 to 12 carbon atoms; R² is, independently of each other, a group defined for R³ or a 3,3,3-trifluoropropyl group, provided that at least one R² is a 3,3,3-trifluoropropyl group; and p is an integer that satisfies 1 ≤ p ≤ 20,
   in an amount of 10 to 60 parts by mass per 100 parts by mass of component (A').

Furthermore, the second aspect of the present invention is also a fluorosilicone rubber which is a cured product of the addition-curable fluorosilicone composition according to the second aspect of the present invention.

The present invention will be described in detail below. However, the present invention is not limited thereto.

### [First Aspect]

The addition-curable fluorosilicone composition according to the first aspect of the present invention contains (A) a specific vinyl group-containing organopolysiloxane having a viscosity at 25°C of 100 to 500,000 mPa·s, (B) a specific branched organohydrogenpolysiloxane having three or more silicon-bonded hydrogen atoms per molecule, (C) an addition reaction catalyst, and (D) a reinforcing silica filler surface-treated with a specific organosilicon compound. The composition is in a liquid form at 23°C. The composition may further contain components other than the above components (A) to (D). Hereinafter, these components will be described.

### (A) Vinyl Group-Containing Organopolysiloxane

Component (A) is an organopolysiloxane represented by the following general formula (1) and having a viscosity at 25°C of 100 to 500,000 mPa·s.

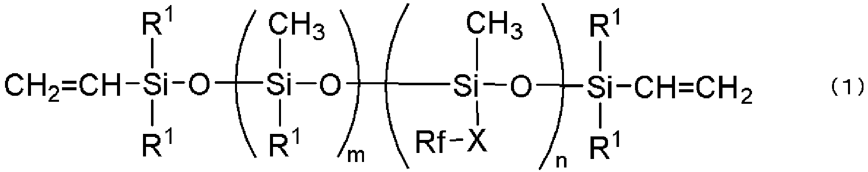

In the formula, R¹ is, independently of each other, a group selected from an alkyl group having 1 to 8 carbon atoms, an aryl group having 6 to 12 carbon atoms, and an aralkyl group having 7 to 12 carbon atoms; Rf is, independently of each other, a group selected from a perfluoroalkyl group having 1 to 10 carbon atoms and a perfluoropolyether group having 3 to 30 carbon atoms; X is a divalent organic group; m is an integer of 0 to 100; and n is an integer of 1 to 800, provided that 5 ≤ m + n ≤ 800.

Component (A) is preferably a perfluoroalkyl group-containing organopolysiloxane represented by the following formula (1').

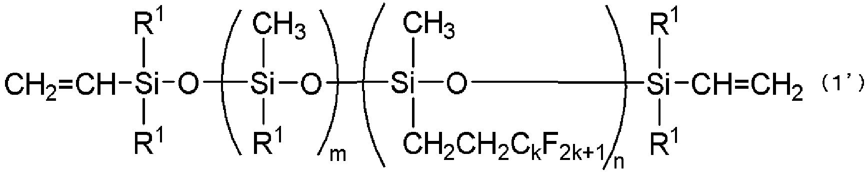

In the formula, R¹ is, independently of each other, a group selected from an alkyl group having 1 to 8 carbon atoms, an aryl group having 6 to 12 carbon atoms, and an aralkyl group having 7 to 12 carbon atoms; k is an integer of 1 to 10; m is an integer of 0 to 100; and n is an integer of 1 to 800, provided that 5 ≤ m + n ≤ 800.

In the formula (1), R¹ may be, independently of each other, a group selected from an alkyl group having 1 to 8 carbon atoms, such as methyl, ethyl, propyl, isopropyl, butyl, isobutyl, tert-butyl, hexyl, or cyclohexyl group, an aryl group having 6 to 12 carbon atoms, such as phenyl or tolyl group, and an aralkyl group having 7 to 12 carbon atoms, such as benzyl group. Among these, an alkyl group having 1 to 8 carbon atoms is preferred, and a methyl group is particularly preferred.

In formula (1), Rf is, independently of each other, a group selected from a perfluoroalkyl group having 1 to 10 carbon atoms and a perfluoropolyether group having 3 to 30 carbon atoms. The perfluoroalkyl group is, for example, represented by the following formula:
CₖF₂ₖ₊₁- (k is an integer of 1 to 10).

The perfluoropolyether group is, for example, represented by the following formulae: 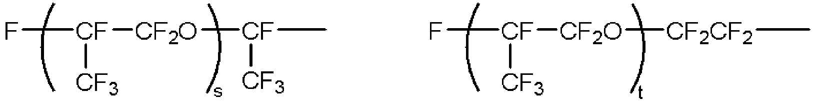 wherein s and t are each an integer of 1 to 9.

Furthermore, in formula (1), X is a divalent organic group. X functions, in the component (A) which is a linear vinyl group-containing organopolysiloxane, as a spacer connecting the main chain and the Rf group of the side chain and can adjust the interaction between Rf groups or between Rf groups and other molecules to achieve desired properties such as resistance of the cured product to hydrocarbon solvent. The divalent organic group is not particularly limited, but can be an alkylene group having 2 to 4 carbon atoms. One or more hydrogen atoms of the alkylene group may be substituted with fluorine atoms or the like and the alkylene group may have an oxygen atom, an ester bond, or an amide bond in the middle or at the terminal.

The divalent organic group is represented, for example, by the following formulae: 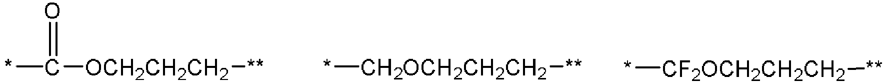 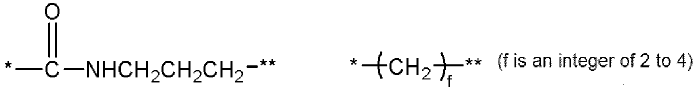 wherein * is bonded to the Rf group and ** is a bond to a silicon atom.

The Rf-X group is preferably a CₖF₂ₖ₊₁-CH₂CH₂ group (k is an integer of 1 to 10) and more preferably a 3,3,3-trifluoropropyl group (k is 1).

m is an integer of 0 to 100, preferably 0 to 50, more preferably 0 to 30, even more preferably 0 to 20, and most preferably 0 to 10. n is an integer of 1 to 800, preferably 5 to 750, more preferably 10 to 650, even more preferably 50 to 650, and most preferably 100 to 650. However, (m + n) is an integer that satisfies 5 ≤ m + n ≤ 800, preferably 10 ≤ m + n ≤ 680, more preferably 60 ≤ m + n ≤ 680, and even more preferably 120 ≤ m + n ≤ 680.

The number of siloxane units having a fluoroalkyl group (i.e., the value of n) is preferably 10 mol% or more, more preferably 20 mol% or more, and particularly preferably 30 to 100 mol%, relative to a total of all siloxane units in the molecule, in particular, relative to a total of bifunctional siloxane units that form the main chain (i.e., n + m). The upper limit is not particularly limited, and may be 100 mol% or less, 95 mol% or less, 90 mol% or less, or 80 mol% or less. This range is preferred because if so, excellent resistance to hydrocarbon solvent can be imparted.

The viscosity at 25°C of the organopolysiloxane (A) is a value within the range of 100 to 500,000 mPa·s, and preferably within the range of 300 to 100,000 mPa·s. Within this range, the physical properties of the cured product are good, and handling workability of the composition is good. Furthermore, it is not preferable that the viscosity is less than 100 mPa·s, because if so, the resulting cured product has insufficient strength, and it is not preferable that the viscosity exceeds 500,000 mPa·s, because if so, the handling properties of the composition become worse. It should be noted that in the first aspect of the present invention, the viscosity is a value determined with a rotary viscometer according to the method described in JIS K 7117-1:1999. The degree of polymerization of the organopolysiloxane (A) is a value at which the viscosity at 25°C is within the above range.

### (B) Organohydrogenpolysiloxane

Component (B) is a branched organohydrogenpolysiloxane represented by the following formula (3) and having three or more silicon-bonded hydrogen atoms per molecule. The organohydrogenpolysiloxane undergoes a hydrosilylation addition reaction with component (A) and acts as a curing agent (crosslinking agent). The molecular structure of component (B) is a branched siloxane having a hydrogen-modified terminal. BY virtue of the inclusion of the organohydrogensiloxane, the fluorosilicone composition can be cured faster and the cured fluorosilicone rubber product can have higher strength.

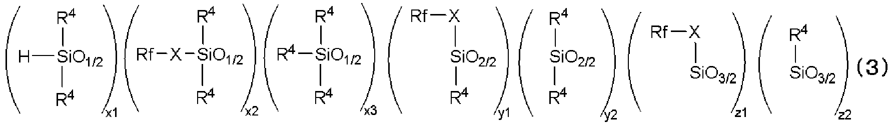

In formula (3), R⁴ is, independently of each other, a group selected from an alkyl group having 1 to 8 carbon atoms, an aryl group having 6 to 12 carbon atoms, and an aralkyl group having 7 to 12 carbon atoms; Rf is, independently of each other, a group selected from a perfluoroalkyl group having 1 to 10 carbon atoms and a perfluoropolyether group having 3 to 30 carbon atoms; and X is a divalent organic group; x1 is a number that satisfies 2 ≤ x1 ≤ 4; x2 is an integer that satisfies 0 ≤ x2 ≤ 20; x3 is an integer that satisfies 0 ≤ x3 ≤ 20; 0 ≤ x2 + x3 ≤ 20 is satisfied; y1 is an integer that satisfies 0 ≤ y1 ≤ 30; z1 is an integer that satisfies 0 ≤ z1 ≤ 10; y2 is an integer that satisfies 0 ≤ y2 ≤ 30; z2 is an integer that satisfies 0 ≤ z2 ≤ 10; and z1 + z2 > 0.

A monovalent organic group R⁴ bonded to a silicon atom other than a hydrogen atom bonded to a silicon atom is a group selected from an alkyl group having 1 to 8 carbons, an aryl group having 6 to 12 carbon atoms, and an aralkyl group having 7 to 12 carbon atoms, and an examples is an unsubstituted or substituted monovalent hydrocarbon group having 1 to 8 carbon atoms, preferably 1 to 6 carbon atoms, that does not contain an aliphatic unsaturated bond such as an alkenyl group. Examples include alkyl groups such as methyl, ethyl, propyl, isopropyl, butyl, isobutyl, tert-butyl, pentyl, neopentyl, hexyl, cyclohexyl, octyl, nonyl, and decyl groups, aryl groups such as phenyl, tolyl, xylyl, and naphthyl groups, and aralkyl groups such as benzyl, phenylethyl, and phenylpropyl groups. A methyl group is preferred. The number of silicon atoms per molecule of component (B) ((x1 + x2 + x3 + y1 + y2 + z1 + z2) or the degree of polymerization) is preferably 4 to 60, more preferably 4 to 50, and even more preferably 4 to 40.

A monovalent organic group Rf bonded to a silicon atom other than a hydrogen atom bonded to a silicon atom is a group selected from a perfluoroalkyl group having 1 to 10 carbon atoms and a perfluoropolyether group having 3 to 30 carbon atoms, and examples include groups defined for Rf in formula (1). A perfluoroalkyl group is preferred and a trifluoromethyl group is more preferred.

X is a divalent organic group, and examples include groups defined for X in formula (1).

The Rf-X group is preferably a CₖF₂ₖ₊₁-CH₂CH₂ group (k is an integer of 1 to 10) and more preferably a 3,3,3-trifluoropropyl group (k is 1).

x1 is a number that satisfies 2 ≤ x1 ≤ 4, x2 is an integer that satisfies 0 ≤ x2 ≤ 20, x3 is an integer that satisfies 0 ≤ x3 ≤ 20, where 0 ≤ x2 + x3 ≤ 20 is satisfied, y1 is an integer that satisfies 0 ≤ y1 ≤30, z1 is an integer that satisfies 0 ≤ z1 ≤ 10, y2 is an integer that satisfies 0 ≤ y2 ≤ 30, z2 is an integer that satisfies 0 ≤ z2 ≤ 10, and z1 + z2 > 0. However, x2, x3, y1, y2, z1, and z2 are not zero at the same time. Since z1 + z2 > 0, the branched organohydrogenpolysiloxane represented by formula (3) contains one or more z1 or z2 units, which are T units.

Examples of component (B) include, but not limited to, the following branched organohydrogenpolysiloxanes.

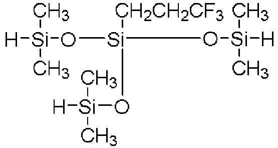

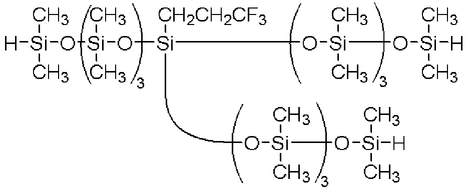

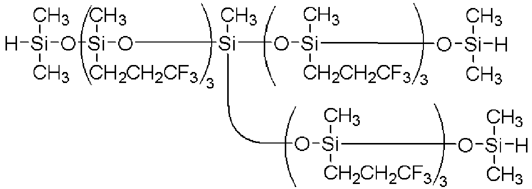

Component (B) is preferably in a liquid form at room temperature (25°C). The viscosity at 25°C of component (B) is preferably 0.1 to 1,000 mPa·s, more preferably 0.5 to 500 mPa·s, and even more preferably 1 to 200 mPa·s. If the viscosity is within this range, workability is good.

The amount of component (B) is such an amount that the number of hydrogen atoms bonded to silicon atoms in component (B) is 0.5 to 10 per silicon-bonded vinyl group in the composition. In other words, the amount of component (B) is such an amount that the ratio of the number of silicon-bonded hydrogen atoms (hydrosilyl group) in component (B) to one silicon-bonded vinyl group (SiVi group) in the composition is within the range of 0.5 to 10, preferably 1 to 5. If the amount of component (B) is less than the above lower limit, the resulting composition does not cure sufficiently. If the blending amount of component (B) exceeds the above upper limit, the resulting silicone rubber has extremely low heat resistance. It should be noted that when the composition includes a vinyl group-containing silicon compound such as a vinyl group-containing organosiloxane other than component (A), the only requirement is that the ratio of the number of silicon-bonded hydrogen atoms in component (B) to the number of vinyl groups bonded to silicon atoms in the composition satisfies the above range.

It should be noted that one type of component (B) may be used alone or two or more types may be used in combination.

Further, the branched organohydrogenpolysiloxane represented by formula (3) may include a hydroxyl group and/or an alkoxy group in the molecule. Specifically, the branched organohydrogenpolysiloxane represented by formula (3) may include a hydroxyl group and/or an alkoxy group having 1 to 6 carbon atoms within a range of 20 mol% or less of the total substituents of the organopolysiloxane. Specific examples of the alkoxy group having 1 to 6 carbon atoms include methoxy, ethoxy, n-propoxy, isopropoxy, n-butoxy, isobutoxy, t-butoxy, pentyloxy, neopentyloxy, and hexyloxy groups, and in particular, methoxy, ethoxy, and isopropoxy groups.

### (C) Addition Reaction Catalyst

An addition reaction catalyst as component (C) may be any catalyst that promotes the addition reaction between vinyl groups in the composition and hydrogen atoms bonded to silicon atoms in component (B). Typically, platinum-group metal catalysts can be suitably used. Examples include platinum-group metals and compounds thereof, such as platinum, palladium, rhodium, chloroplatinic acid, alcohol-modified chloroplatinic acid, coordination compounds of chloroplatinic acid and olefins, vinyl siloxanes, or acetylene compounds, tetrakis(triphenylphosphine)palladium, and chlorotris(triphenylphosphine)rhodium. In particular, platinum-based compounds are preferred. One type of component (C) may be used alone or two or more types may be used in combination.

The only requirement is that the blending amount of component (C) may be an effective amount as a catalyst (catalytic amount), but the amount is typically 0.5 to 1,000 ppm, preferably within the range of 1 to 500 ppm, and more preferably within the range of 10 to 100 ppm, in terms of catalyst metal element (platinum group metal element) on a mass basis, relative to the amount of component (A). When this range is satisfied, the addition reaction proceeds at an appropriate rate, and the cured product has good heat resistance.

### (D) Reinforcing Silica Filler

Component (D) is a reinforcing silica surface-treated with a linear organosilicon compound represented by the following formula (2) and having silanol groups at both ends of the molecular chain.

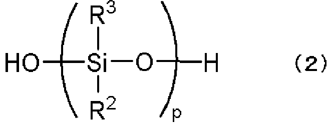

In formula (2), R³ is, independently of each other, a group selected from an alkyl group having 1 to 8 carbon atoms, an aryl group having 6 to 12 carbon atoms, and an aralkyl group having 7 to 12 carbon atoms, and examples include those listed for R¹. A methyl group is preferred. Each R² is a group defined for R³ or a 3,3,3-trifluoropropyl group, provided that at least one R² is a 3,3,3-trifluoropropyl group. p is an integer that satisfies 1 ≤ p ≤ 20, and preferably an integer of 3 to 9.

In the first aspect of the present invention, the reinforcing silica filler is essential in order to impart mechanical strength to the resulting silicone rubber. If the organosilicon compound represented by formula (2) does not have a 3,3,3-trifluoropropyl group, the resulting cured product is inferior in tensile strength, elongation at break, and compression set.

Since the present composition contains the reinforcing silica filler surface-treated with a linear organosilicon compound with both ends of the molecular chain capped with silanol groups, the viscosity of the present composition and the compression set of the rubber after heating and curing can be reduced.

The reinforcing silica filler may be any of those conventionally used in silicone rubber compositions. Precipitated silica (wet silica), fumed silica (dry silica), calcined silica, and the like are preferred. In particular, fumed silica is preferred.

Component (D) is a component obtained by surface-treating surface-untreated silica with the organosilicon compound of the formula (2) in advance. Alternatively, surface-untreated silica and a polysiloxane component (i.e., component (A)) may be kneaded, then the organosilicon compound of the formula (2) may be added, and then the resulting mixture may be heated and mixed preferably in the presence of a small amount of water to perform surface treatment. The surface-untreated silica for use in the first aspect of the present invention refers to silica that has not been surface-treated with the organosilicon compound of the formula (2), and may be dry silica surface-treated with dimethyldichlorosilane or the like (e.g., Aerosil R-974). It is preferable that dry silica having thus been surface-treated with dimethyldichlorosilane or the like is further surface-treated with the organosilicon compound of the formula (2).

When silica is surface-treated with the organosilicon compound of the formula (2), the treatment amount is preferably 1 to 30 parts by mass, particularly 2 to 20 parts by mass of the organosilicon compound of the formula (2) with respect to 40 parts by mass of silica before surface treatment with the organosilicon compound of the formula (2).

An organosilane or organosilazane other than the organosilicon compound of the formula (2) may be used in combination as a surface treatment agent. Examples of the organosilane include chlorosilanes such as trimethylchlorosilane, dimethyldichlorosilane, dimethylvinylchlorosilane, and trivinylchlorosilane; alkoxysilanes such as methyltrimethoxysilane, ethyltrimethoxysilane, propyltrimethoxysilane, butyltrimethoxysilane, dimethyldimethoxysilane, diethyldimethoxysilane, vinyltriethoxysilane, vinyltrimethoxysilane, trimethylmethoxysilane, triethylmethoxysilane, and vinyltris(methoxyethoxy)silane; and silazanes such as hexamethyldisilazane, hexamethylcyclotrisilazane, and 1,3-divinyl-1,1,3,3-tetramethyldisilazane. Among these, hexamethyldisilazane, 1,3-divinyl-1,1,3,3-tetramethyldisilazane, and the like are preferred. Preferably, the treatment amount of the organosilane or the organosilazane is 0.1 to 15 parts by mass, particularly 0.1 to 10 parts by mass with respect to 40 parts by mass of surface-untreated silica.

The specific surface area of silica before surface treatment with the organosilicon compound of the formula (2) as determined by the BET method is 50 m²/g or more, preferably 100 to 400 m²/g, and more preferably 150 to 350 m²/g. When the specific surface area is 50 m²/g or more, sufficient strength can be obtained and the appearance of the rubber molded article can be improved. If the specific surface area is 400 m²/g or less, blending is easy. The specific surface area of silica after surface treatment as determined by the BET method may also be within the above range.

The blending amount of component (D) is 10 to 60 parts by mass, and preferably 15 to 55 parts by mass, per 100 parts by mass of component (A). If the blending amount is less than the above lower limit, the resulting silicone rubber does have sufficient rubber strength. If the blending amount exceeds the above upper limit, blending component (D) into the composition is difficult.

### Other Components

The liquid addition-curable fluorosilicone composition according to the first aspect of the present invention may contain components other than components (A) to (D) as necessary. Examples of the other components include conductive agents such as carbon black, conductive zinc oxide, and metal powder, nitrogen-containing compounds, acetylene compounds such as ethynylcyclohexanol, phosphorus compounds, nitrile compounds, carboxylates, hydrosilylation reaction control agents such as tin compounds, mercury compounds, and sulfur compounds, heat resistance-imparting agents such as iron oxide and cerium oxide, compression set improvers such as triazole compounds and benzotriazole derivatives such as benzotriazole silane, internal release agents such as dimethyl silicone oil, adhesion-imparting agents, and thixotropy-imparting agents. However, the liquid addition-curable fluorosilicone composition according to the first aspect of the present invention does not contain an isocyanuric acid derivative having three trialkoxy groups per molecule.

The liquid addition-curable fluorosilicone composition according to the first aspect of the present invention may be prepared by uniformly mixing the components (A) to (D) and optional components as necessary, using a general mixing stirrer or kneading device such as a kneader or a planetary mixer.

The composition according to the first aspect of the present invention is characterized by being in a liquid form at 23°C. As used herein "in a liquid form at 23°C" means that the composition has a constant volume at 23°C but changes shape (has fluidity) according to the shape of a container. In view of workability and the like, the viscosity at 23°C at a shear rate of 10 s⁻¹ is preferably 1,500 Pa·s or less, more preferably 100 to 1,200 Pa·s, and even more preferably 200 to 1,100 Pa·s. If the viscosity exceeds 1,500 Pa·s, it takes time to feed the material in cast, compression, and injection molding, which may significantly reduce productivity. It should be noted that, in the first aspect of the present invention, the viscosity at the above-described shear rate is determined with a precision rotary viscometer (available from Thermo Fisher Scientific).

The liquid addition-curable fluorosilicone composition according to the first aspect of the present invention may be in a two-component type. In this case, the components may be appropriately divided such that component (B) as a crosslinking agent and component (C) as an addition reaction catalyst are not mixed in the same composition (liquid A or liquid B). For example, preferably, the composition may be a two-component type composition including a liquid A containing components (A), (C) and (D) and a liquid B containing components (A), (B) and (D), and may be prepared so that the two liquids can be mixed in equal mass or volume.

The liquid addition-curable fluorosilicone composition according to the first aspect of the present invention may be applied to various molding methods such as cast molding, compression molding, and injection molding. Hereafter, methods for molding a fluorosilicone rubber by cast molding, compression molding, or injection molding will be described in detail.

In the case of cast molding, the liquid addition-curable fluorosilicone composition is divided into two liquids: a liquid A and a liquid B. The materials divided into two liquids, liquid A and liquid B, are mixed in equal amounts, and the mixture is poured into a metal mold and heated to be cured in a thermostatic bath, whereby a silicone rubber is molded. In the case of compression molding, a metal mold is installed in a compressor such as a press machine, the liquid A and liquid B are mixed in equal amounts in the same manner as in cast molding, and the mixture is poured into the mold, and heated to be cured, whereby a silicone rubber is molded. In the case of injection molding, the liquid A and liquid B are each supplied from a material supply pump to a quantity meter. The liquid A and liquid B merge in equal amounts from the quantity meter through a material supply line. The materials are mixed in the screw and cylinder sections of the main body of a molding machine. Thereafter, the resulting mixture is injected into a mold, then heated to be cured in the mold, whereby a silicone rubber is molded.

The liquid addition-curable fluorosilicone composition according to the first aspect of the present invention is particularly suitable for a liquid silicone rubber injection molding system (LIMS: Liquid Injection Molding System). LIMS is a molding system that combines a liquid silicone rubber having excellent properties with a molding machine that injects the liquid silicone rubber precisely and stably. This system automates all processes from mixing to molding, simplifies the processes and saves time, and makes it easy to mold high-quality products. In this molding method, the composition according to the first aspect of the present invention has the following advantages: (i) the system can save time in the processes because cure speed is fast and molding time can be reduced; (ii) the productivity is increased, because the material is liquid, so molding can be done at low injection pressure, and the system is also suitable for molding high-precision parts; (iii) the molding process can be automated because the system is suitable for flashless and runnerless molding, and releasability after curing is excellent; and (iv) the molding process is environmentally friendly because there are no byproducts generated due to the curing reaction, and flashless and runnerless molding eliminates the need for processing waste materials.

The first aspect of the present invention provides a fluorosilicone rubber which is a cured product of the addition-curable fluorosilicone composition. Such fluorosilicone rubber can retain good mechanical strength. Curing of the composition may be performed according to known techniques, and the curing method and conditions are not particularly limited.

The curing and molding (primary cure) conditions of the liquid addition-curable fluorosilicone composition may be the same as those of known addition reaction-curable silicone compositions, and the composition can be cured and molded by heating at a curing temperature of 80 to 220°C, particularly 120 to 200°C, with a curing time of 3 seconds to 10 minutes, particularly 5 seconds to 5 minutes. The molded cured product may be subjected to post curing (secondary curing) as necessary, for example, at 180 to 220°C for about 30 minutes to 6 hours.

A cured product (silicone rubber) obtained from the liquid addition-curable fluorosilicone composition of the present application has a compression set of 10% or less after compression at 180°C for 22 hours as determined according to the description of JIS K 6249: 2003, and a tensile strength of 5.0 MPa or more as mechanical strength. Alternatively, the compression set after compression at 180°C for 22 hours at a compression ratio of 25% according to JIS K 6249: 2003 may be 15% or less, and preferably 10% or less. When the compression set is 10% or less, the cured product may be used as a part (molded product) such as a seal material, O-ring, or packing. Regarding the mechanical strength, a tensile strength is preferably 4.5 MPa or more and preferably 5.0 MPa or more, in view of the practical strength of the rubber molded article.

The first aspect of the present invention also provides a fluorosilicone rubber molded article which is a molded product of the fluorosilicone rubber.

The fluorosilicone rubber molded article obtained by heating and curing the liquid addition-curable fluorosilicone composition according to the first aspect of the present invention has excellent resistance to gasoline and oil and therefore can be suitably used as a rubber part for aircrafts and vehicles, a printer part, and the like. Further, the molded article can also be suitably used as a mobile part in recent years in view of sebum resistance and as a seal part for fuel cell vehicles in recent years in view of acid resistance.

### [Second Aspect]

### [Liquid Addition-Curable Fluorosilicone Composition]

The liquid addition-curable fluorosilicone composition according to the second aspect of the present invention generally contains (A') an alkenyl group-containing organopolysiloxane, (B') an organohydrogenpolysiloxane, (C') an addition reaction catalyst, and (D') a reinforcing silica filler.

Hereinafter, each component in the liquid addition-curable fluorosilicone composition according to the second aspect of the present invention will be described in more detail.

### (A') Alkenyl Group-Containing Organopolysiloxane

Component (A') is an alkenyl group (vinyl group)-containing organopolysiloxane represented by the following general formula (1A) and has a viscosity at 25°C of 100 to 500,000 mPa·s.

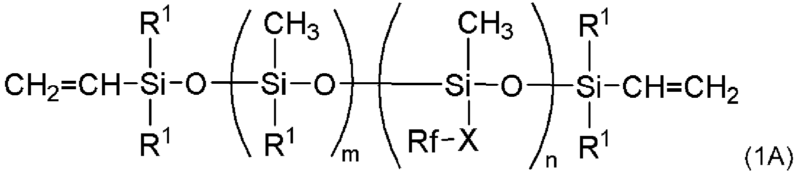

In the formula, R¹ is, independently of each other, a group selected from an alkyl group having 1 to 8 carbon atoms, an aryl group having 6 to 12 carbon atoms, and an aralkyl group having 7 to 12 carbon atoms; Rf is, independently of each other, a group selected from a perfluoroalkyl group having 1 to 10 carbon atoms and a perfluoropolyether group having 3 to 30 carbon atoms; X is a divalent organic group; m is an integer of 0 to 100; and n is an integer of 1 to 800, provided that 5 ≤ m + n ≤ 800.

Component (A') is preferably a perfluoroalkyl group-containing organopolysiloxane represented by the following general formula (1A').

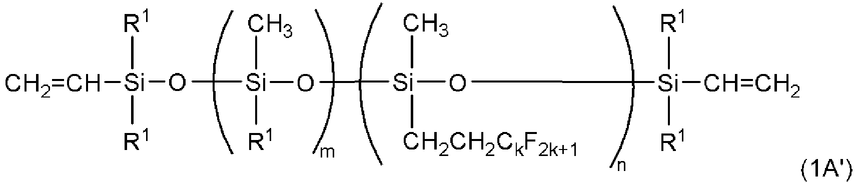

In the formula, R¹ is, independently of each other, a group selected from an alkyl group having 1 to 8 carbon atoms, an aryl group having 6 to 12 carbon atoms, and an aralkyl group having 7 to 12 carbon atoms; k is an integer of 1 to 10; m is an integer of 0 to 100; and n is an integer of 1 to 800, provided that 5 ≤ m + n ≤ 800.

In formulae (1A) and (1A'), R¹ is, independently of each other, a group selected from an alkyl group having 1 to 8 carbon atoms, such as methyl, ethyl, propyl, isopropyl, butyl, isobutyl, tert-butyl, hexyl, or cyclohexyl group, an aryl group having 6 to 12 carbon atoms, such as phenyl or tolyl group, and an aralkyl group having 7 to 12 carbon atoms, such as benzyl group. Among these, an alkyl group having 1 to 8 carbon atoms is preferred, and a methyl group is particularly preferred.

In formula (1A'), Rf is, independently of each other, a group selected from a perfluoroalkyl group having 1 to 10 carbon atoms and a perfluoropolyether group having 3 to 30 carbon atoms. The perfluoroalkyl group is, for example, represented by the following formula:
CₖF₂ₖ₊₁- (k is an integer of 1 to 10).

The perfluoropolyether group is, for example, represented by the following formulae: 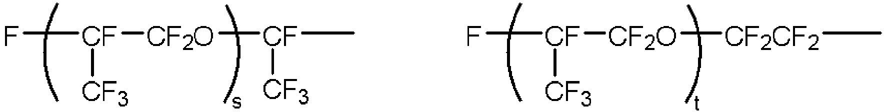 wherein s and t are each an integer of 1 to 9.

In formula (1A), X is a divalent organic group. The divalent organic group is represented, for example, by the following formulae: 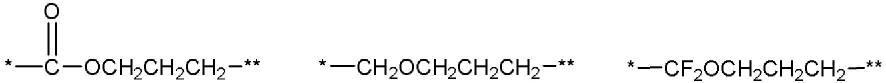 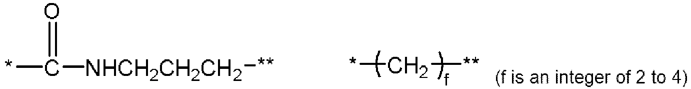 wherein * is a bond to the Rf group and ** is a bond to a silicon atom.

m is an integer of 0 to 100, preferably 0 to 50, more preferably 0 to 30, even more preferably 0 to 20, and most preferably 0 to 10. n is an integer of 1 to 800, preferably 5 to 750, more preferably 10 to 650, even more preferably 50 to 650, and most preferably 100 to 650. However, (m + n) is an integer that satisfies 5 ≤ m + n ≤ 800, preferably 10 ≤ m + n ≤ 680, more preferably 60 ≤ m + n ≤ 680, and even more preferably 120 ≤ m + n ≤ 680.

The viscosity at 25°C of component (A') organopolysiloxane is a value within the range of 100 to 500,000 mPa·s, and preferably within the range of 300 to 100,000 mPa·s. Within this range, the physical properties of the cured product are good, and handling workability of the composition is good. Furthermore, it is not preferable that the viscosity is less than 100 mPa·s, because if so, the resulting cured product has insufficient strength, and it is not preferable that the viscosity exceeds 500,000 mPa·s, because if so, the handling properties of the composition become worse. It should be noted that, in the second aspect of the present invention, the viscosity is a value determined with a rotary viscometer according to the method described in JIS K 7117-1:1999. The degree of polymerization of the organopolysiloxane (A') is a value at which the viscosity at 25°C is within the above range.

The number of siloxane units having a perfluoroalkyl group or a perfluoropolyether group (i.e., the value of n) is preferably 10 mol% or more, more preferably 20 mol% or more, and particularly preferably 30 to 100 mol%, relative to a total of all siloxane units in the molecule, in particular, relative to a total of bifunctional siloxane units that form the main chain (i.e., n + m). The upper limit is not particularly limited, and may be 100 mol% or less, 95 mol% or less, 90 mol% or less, or 80 mol% or less. This range is preferred because if so, excellent resistance to hydrocarbon solvent can be imparted.

It should be noted that the liquid addition-curable fluorosilicone composition according to the second aspect of the present invention contains, as a main agent, a linear polysiloxane having a repeating structure of diorganosiloxane units having a perfluoroalkyl group or a perfluoropolyether group as a main chain. On the other hand, a general dimethyl silicone composition includes, as a main agent, a linear dimethylpolysiloxane having a repeating structure of dimethylsiloxane units as a main chain. In this respect, the liquid addition-curable fluorosilicone composition according to the second aspect of the present invention is essentially different from the dimethyl silicone composition.

### (B') Organohydrogenpolysiloxane

Th organohydrogenpolysiloxane which is the component (B') is an organohydrogenpolysiloxane represented by the following formula (2A) and having 3 to 5 silicon-bonded hydrogen atoms per molecule.

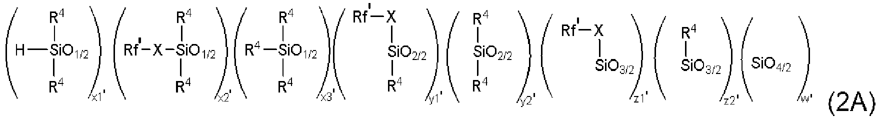

In formula (2A), R⁴ is, independently of each other, a group selected from an alkyl group having 1 to 8 carbon atoms, an aryl group having 6 to 12 carbon atoms, and an aralkyl group having 7 to 12 carbon atoms; Rf' is, independently of each other, a group selected from a perfluoroalkyl group having 1 to 10 carbon atoms and a perfluoropolyether group having 3 to 30 carbon atoms; X is a divalent organic group; x1' is an integer that satisfies 3 ≤ x1' ≤ 5; x2' and x3' are each an integer that satisfies 0 ≤ x2' + x3' ≤ 20; y1' is an integer that satisfies 0 ≤ y1' ≤ 30; y2' is an integer that satisfies 0 ≤ y2' ≤ 30; z1' is an integer that satisfies 0 ≤ z1' ≤ 10; z2' is an integer that satisfies 0 ≤ z2' ≤ 10; and w satisfies 0 < w ≤ 10, provided that x2', x3', y1', y2', z1', and z2' are not zero at the same time.

Since w satisfies 0 < w ≤ 10 in formula (2A), component (B') organohydrogenpolysiloxane always includes a "SiO_{4/2}" unit, that is, a Q unit.

The organohydrogenpolysiloxane undergoes a hydrosilylation addition reaction with component (A') and acts as a curing agent (crosslinking agent).

The molecular structure of component (B') is preferably a branched siloxane having a hydrogen-modified terminal. By virtue of the inclusion of the organohydrogensiloxane, the silicone rubber can be cured faster and have higher strength.

Preferably, component (B') organohydrogenpolysiloxane is an organohydrogenpolysiloxane represented by the following formula (2A') and having 3 to 5 silicon-bonded hydrogen atoms per molecule.

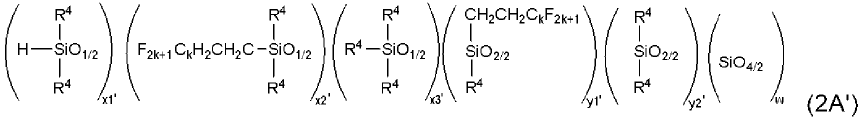

In formula 2A', R⁴ is, independently of each other, a group selected from an alkyl group having 1 to 8 carbon atoms, an aryl group having 6 to 12 carbon atoms, and an aralkyl group having 7 to 12 carbon atoms; X is a divalent organic group; x1' is an integer that satisfies 3 ≤ x1' ≤ 5; x2' and x3' are each an integer that satisfies 0 ≤ x2' + x3' ≤ 20; y1' is an integer that satisfies 0 ≤ y1' ≤ 30; y2' is an integer that satisfies 0 ≤ y2' ≤ 30; w satisfies 0 < w ≤ 10; and k is an integer of 1 to 10, provided that x2', x3', y1', and y2' are not zero at the same time.

Examples of a monovalent organic group R⁴ bonded to a silicon atom, other than a hydrogen atom bonded to a silicon atom, include an alkyl group which is an unsubstituted or substituted monovalent hydrocarbon group having 1 to 8 carbon atoms, preferably 1 to 6 carbon atoms, that does not contain an aliphatic unsaturated bond such as an alkenyl group, an aryl group having 6 to 12 carbon atoms that does not contain an aliphatic unsaturated bond, and an aralkyl group having 7 to 12 carbon atoms that does not contain an aliphatic unsaturated bond. Examples include alkyl groups such as methyl, ethyl, propyl, isopropyl, butyl, isobutyl, tert-butyl, pentyl, neopentyl, hexyl, cyclohexyl, octyl, nonyl, and decyl groups, aryl groups such as phenyl, tolyl, xylyl, and naphthyl groups, and aralkyl groups such as benzyl, phenylethyl, and phenylpropyl groups. A methyl group is preferred.

The number of silicon atoms per molecule of component (B') (or the degree of polymerization) is preferably 4 to 60, more preferably 4 to 50, and even more preferably 4 to 40.

A monovalent organic group Rf' bonded to a silicon atom, other than a hydrogen atom bonded to a silicon atom, is a perfluoroalkyl group having 1 to 10 carbon atoms or a perfluoropolyether group having 3 to 30 carbon atoms, preferably the perfluoroalkyl group, and more preferably a 3,3,3-trifluoropropyl group.

Component (B') is preferably in a liquid form at room temperature (25°C). The viscosity at 25°C of component (B') is preferably 0.1 to 1,000 mPa·s, more preferably 0.5 to 500 mPa·s, and even more preferably 1 to 200 mPa·s. With the viscosity at 25°C of 0.1 to 1,000 mPa·s, the composition can exhibit good workability.

The amount of component (B') is such an amount that the ratio of the number of silicon-bonded hydrogen atoms in component (B') to one silicon-bonded alkenyl group in the composition according to the second aspect of the present invention is within the range of 0.5 to 10, preferably 1 to 5. If the amount of component (B') is less than the above lower limit, the resulting composition does not cure sufficiently. If the blending amount of component (B') exceeds the above upper limit, the resulting silicone rubber has extremely low heat resistance. It should be noted that when the composition includes an alkenyl group-containing organosiloxane other than component (A') described later, the only requirement is that the ratio of the number of silicon-bonded hydrogen atoms in component (B') to the number of alkenyl groups bonded to silicon atoms in the composition satisfies the above range.

One type of component (B') may be used alone or two or more types may be used in combination. Component (B') may include a combination of two or more types of organohydrogenpolysiloxane having two or more silicon-bonded hydrogen atoms per molecule.

### (C') Addition Reaction Catalyst

An addition reaction catalyst as component (C') may be any catalyst that promotes the addition reaction between alkenyl groups (vinyl groups) in component (A') and hydrogen atoms bonded to silicon atoms in component (B'). Typically, platinum group metal catalysts can be suitably used. Examples include platinum group metals and compounds thereof, such as platinum, palladium, rhodium, chloroplatinic acid, alcohol-modified chloroplatinic acid, coordination compounds of chloroplatinic acid and olefins, vinyl siloxanes, or acetylene compounds, tetrakis(triphenylphosphine)palladium, and chlorotris(triphenylphosphine)rhodium. In particular, platinum-based compounds are preferred.

One type of component (C') may be used alone or two or more types may be used in combination.

The blending amount of component (C') may be an effective amount as a catalyst, but the amount is typically 0.5 to 1,000 ppm, preferably within the range of 1 to 500 ppm, and more preferably within the range of 10 to 100 ppm, in terms of catalyst metal element (platinum group metal element) on a mass basis, relative to the amount of component (A'). When this range is satisfied, the addition reaction proceeds at an appropriate rate, and the cured product has good heat resistance.

### (D') Reinforcing Silica Filler

Component (D') is a reinforcing silica surface-treated with a linear organosilicon compound represented by the following formula (3A) and having silanol groups at both ends of the molecular chain.

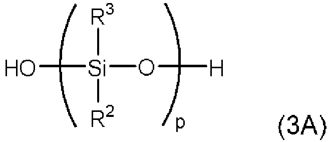

In formula (3A), R³ is, independently of each other, a group selected from an alkyl group having 1 to 8 carbon atoms, an aryl group having 6 to 12 carbon atoms, and an aralkyl group having 7 to 12 carbon atoms, and examples include those listed for R¹. A methyl group is preferred. R² is, independently of each other, a group defined for the R³ or a 3,3,3-trifluoropropyl group, provided that at least one R² is a 3,3,3-trifluoropropyl group. p is an integer that satisfies 1 ≤ p ≤ 20, and preferably an integer of 3 to 9.

In the second aspect of the present invention, the reinforcing silica filler is essential in order to impart mechanical strength to the resulting silicone rubber. If the organosilicon compound represented by formula (3A) does not have a 3,3,3-trifluoropropyl group, the resulting cured product is inferior in tensile strength, elongation at break, and compression set.

Since the present composition contains the reinforcing silica filler surface-treated with a linear organosilicon compound with both ends of the molecular chain capped with silanol groups, the viscosity of the present composition and the compression set of the rubber after heating and curing can be reduced.

The reinforcing silica filler may be any of those conventionally used in silicone rubber compositions. Precipitated silica (wet silica), fumed silica (dry silica), calcined silica, and the like are preferred. In particular, fumed silica is preferred.

Component (D') may be a component obtained by surface-treating surface-untreated silica with the organosilicon compound of the formula (3A) in advance. Alternatively, surface-untreated silica and a polysiloxane component (i.e., component (A')) may be kneaded, then the organosilicon compound of formula (3A) may be added, and then the resulting mixture is heated and mixed preferably in the presence of a small amount of water to perform surface treatment. Preferably, the surface-untreated silica used in the second aspect of the present invention may be dry silica surface-treated with dimethyldichlorosilane or the like (e.g., Aerosil R-974). It is preferable that dry silica having thus been surface-treated with dimethyldichlorosilane or the like is further surface-treated with the organosilicon compound of the formula (3A).

When silica is surface-treated with the organosilicon compound of the formula (3A), , the treatment amount is preferably 1 to 30 parts by mass, particularly 2 to 20 parts by mass of the organosilicon compound of the formula (3A) with respect to 40 parts by mass of silica before surface treatment with the organosilicon compound of formula (3A).

An organosilane or organosilazane other than the organosilicon compound of the formula (3A) may be used in combination as a surface treatment agent. Examples of the organosilane include chlorosilanes such as trimethylchlorosilane, dimethyldichlorosilane, dimethylvinylchlorosilane, and trivinylchlorosilane; alkoxysilanes such as methyltrimethoxysilane, ethyltrimethoxysilane, propyltrimethoxysilane, butyltrimethoxysilane, dimethyldimethoxysilane, diethyldimethoxysilane, vinyltriethoxysilane, vinyltrimethoxysilane, trimethylmethoxysilane, triethylmethoxysilane, and vinyltris(methoxyethoxy)silane; and silazanes such as hexamethyldisilazane, hexamethylcyclotrisilazane, and 1,3-divinyl-1,1,3,3-tetramethyldisilazane. Among these, hexamethyldisilazane, 1,3-divinyl-1,1,3,3-tetramethyldisilazane, and the like are preferred. Preferably, the treatment amount of the organosilane or the organosilazane is 0.1 to 15 parts by mass, particularly 0.1 to 10 parts by mass with respect to 40 parts by mass of surface-untreated silica.

The specific surface area of silica before surface treatment with the organosilicon compound of the formula (3A) as determined by the BET method is 50 m²/g or more, preferably 100 to 400 m²/g, and more preferably 150 to 350 m²/g. When the specific surface area of 50 m²/g or more, sufficient strength can be obtained the appearance of the rubber molded article can be improved. If the specific surface area is 400 m²/g or less, blending is easy. The specific surface area of silica after surface treatment as determined by the BET method may also be within the above range.

The blending amount of component (D') is 10 to 60 parts by mass, and preferably 15 to 55 parts by mass, per 100 parts by mass of component (A'). If the blending amount is less than the above lower limit, the resulting silicone rubber does have sufficient rubber strength. If the blending amount exceeds the above upper limit, blending component (D') into the composition is difficult.

### Other Components

The liquid addition-curable fluorosilicone composition according to the second aspect of the present invention may contain components other than components (A') to (D'), as necessary. The blending amount thereof is not limited.

Examples of the other components include, for example, conductive agents such as carbon black, conductive zinc white, and metal powder; hydrosilylation reaction control agents such as nitrogen-containing compounds, acetylene compounds, phosphorus compounds, nitrile compounds, carboxylates, tin compounds, mercury compounds, and sulfur compounds; heat resistance-imparting agents such as iron oxide and cerium oxide; compression set improvers such as triazole compounds and benzotriazole derivatives; internal mold release agents such as dimethyl silicone oil; adhesion-imparting agents, thixotropic agents, and the like. It is preferable that the liquid addition-curable fluorosilicone composition according to the second aspect of the present invention does not contain an isocyanuric acid derivative having three trialkoxy groups per molecule.

### [Preparation Method]

The liquid addition-curable fluorosilicone composition according to the second aspect of the present invention can be prepared, for example, by uniformly mixing the components (A') to (D') and optional components as necessary, using a general mixing stirrer or kneading device such as a kneader or a planetary mixer.

### [Properties]

The composition according to the second aspect of the present invention is characterized by being in a liquid form at 23°C. In view of workability and the like, the viscosity at 23°C at a shear rate of 10 s⁻¹ is preferably 1,500 Pa·s or less, more preferably 100 to 1,200 Pa·s, and even more preferably 200 to 1,100 Pa·s. If the viscosity is 1,500 Pa·s or less, high productivity can be provided because it does not take much time to feed the material in cast, compression, and injection molding. It should be noted that, in the second aspect of the present invention, the viscosity at the above-described shear rate is determined with a precision rotary viscometer (available from Thermo Fisher Scientific).

The liquid addition-curable fluorosilicone composition according to the second aspect of the present invention may be in a two-component type. In this case, the components may be appropriately divided such that component (B') as a crosslinking agent and component (C') as an addition reaction catalyst are not mixed in the same composition (liquid A or liquid B). For example, preferably, the composition may be a two-component type composition including a liquid A containing components (A'), (C'), and (D') and a liquid B containing components (A'), (B'), and (D'), and may be prepared so that the two liquids can be mixed in equal mass or volume.

### [Fluorosilicone Rubber]

The fluorosilicone rubber is a cured product of the addition-curable fluorosilicone composition according to the second aspect of the present invention.

The liquid addition-curable fluorosilicone composition according to the second aspect of the present invention may be applied to various molding methods such as cast molding, compression molding, and injection molding. Hereinafter, methods for molding a fluorosilicone rubber by cast molding, compression molding, or injection molding will be described in detail.

In the case of cast molding, the liquid addition-curable fluorosilicone composition is divided into two liquids: a liquid A and a liquid B. The materials (components) divided into two liquids, liquid A and liquid B, are mixed in equal amounts, and the mixture is poured into a metal mold and heated to be cured in a thermostatic bath, whereby a silicone rubber is molded.

In the case of compression molding, a metal mold is installed in a compressor such as a press machine, the liquid A and liquid B are mixed in equal amounts in the same manner as in cast molding, and the mixture is poured into the mold, and heated to be cured, whereby a silicone rubber is molded.

In the case of injection molding, the liquid A and liquid B are each supplied from a material supply pump to a quantity meter. The liquid A and liquid B merge in equal amounts from the quantity meter through a material supply line. The materials are mixed in the screw and cylinder sections of the main body of a molding machine. Thereafter, the resulting mixture is injected into a mold, then heated to be cured in the mold, whereby a silicone rubber is molded.

The curing and molding (primary cure) conditions of the liquid addition-curable fluorosilicone composition may be the same as those of known addition reaction-curable silicone compositions, and the composition can be cured and molded by heating at a curing temperature of 80 to 220°C, particularly 120 to 200°C, with a curing time of 3 seconds to 10 minutes, particularly 5 seconds to 5 minutes. The molded cured product may be subjected to post curing (secondary curing) as necessary, for example, at 180 to 220°C for about 30 minutes to 6 hours.

The cured product (silicone rubber) obtained from the liquid addition-curable fluorosilicone composition according to the second aspect of the present invention, that is, the silicone rubber according to the second aspect of the present invention may have a compression set of 10% or less after compression at 180°C for 22 hours as determined according to the description of JIS K 6249: 2003, and a tensile strength of 5.0 MPa or more as mechanical strength. Alternatively, the compression set after compression at 180°C for 22 hours at a compression ratio of 25% according to JIS K 6249: 2003 may be 15% or less, and preferably 10% or less. When the compression set is 10% or less, the cured product may be used as a part (molded product) such as a seal material, O-ring, or packing. Regarding the mechanical strength, a tensile strength is preferably 4.5 MPa or more and more preferably 5.0 MPa or more, in view of the practical strength of the rubber molded article.

The fluorosilicone rubber molded article (silicone rubber) obtained by heating and curing the liquid addition-curable fluorosilicone composition according to the second aspect of the present invention has excellent resistance to gasoline and oil and therefore can be suitably used as a rubber part for aircrafts and vehicles, a printer part, and the like. Further, the molded article can also be suitably used as a mobile part in recent years in view of sebum resistance and as a seal part for fuel cell vehicles in recent years in view of acid resistance.

### EXAMPLES

Hereinafter, the present invention will be described in further detail with reference to Examples and Comparative Examples. However, the present invention is not limited to the following Examples.

The viscosities of component (A) and component (A') were determined at 25°C with a BH-type rotary viscometer (rotor No. 7, rotational speed: 10 rpm).

The curability of each composition was measured with a curability tester [rotorless-type disk rheometer, moving-die rheometer, or MDR], in which 10% and 90% cure times when measured at 130°C for 3 minutes (i.e., the time from the start of measurement when 10% and 90% torque values were applied relative to the maximum torque value for 3 minutes after the start of measurement at 130°C) were T10 and T90 (seconds).

The hardness, tensile strength, elongation at break, and tear strength (angle) of the cured product were determined by the following method.

The composition was press-cured at 150°C for 10 minutes and further subjected to secondary vulcanization (post-curing) at 200°C for 4 hours in a thermostatic bath. The hardness (type A durometer hardness), tensile strength, elongation at break, and tear strength (angle) of the resulting cured product were determined according to the description of JIS K 6249:2003.

The compression set of the cured product was determined by the following method.

The composition was cured (press-cured) at 150°C for 15 minutes and further subjected to secondary vulcanization (post-curing) at 200°C for 4 hours in a thermostatic bath. The compression set of the resulting cured product after compression at 180°C for 22 hours at a compression ratio of 25% was determined according to the description of JIS K 6249: 2003.

### <Examples 1 to 4, and Comparative Examples 1 and 2>

Each component used in the following Examples 1 to 4 and Comparative Examples 1 and 2 is as follows.

Component (A): Trifluoropropyl methyl polysiloxane represented by the following formula (4) [a vinyl group content of 4.6 × 10⁻⁵ mol/g] with both ends capped with dimethylvinylsiloxy groups and having a viscosity at 25°C of 76.6 Pa·s

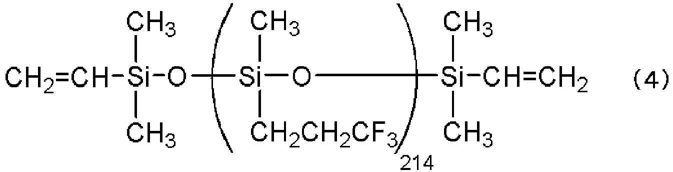

Component (D):
Fumed silica having a specific surface area of 200 m²/g as determined by the BET method (Aerosil R-974 available from Nippon Aerosil Co., Ltd.), and
Organosilicon compound represented by the following formula (5)

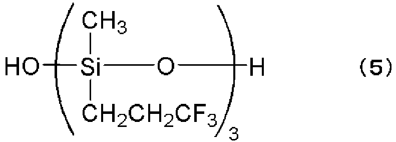

(B) Crosslinking agent:
(B-1) Methylhydrogenpolysiloxane represented by the following formula (6-1) [SiH group content: 0.0086 mol/g] 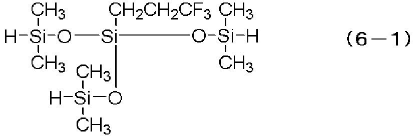
(B-2) Methylhydrogenpolysiloxane represented by the following formula (6-2) [SiH group content: 0.0020 mol/g] 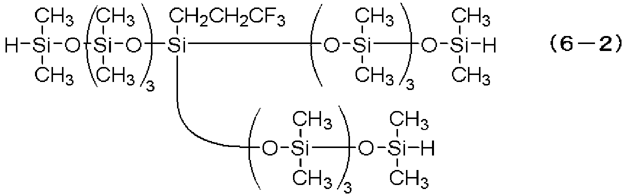
(B-3) Methylhydrogenpolysiloxane represented by the following formula (6-3) [SiH group content: 0.0016 mol/g] 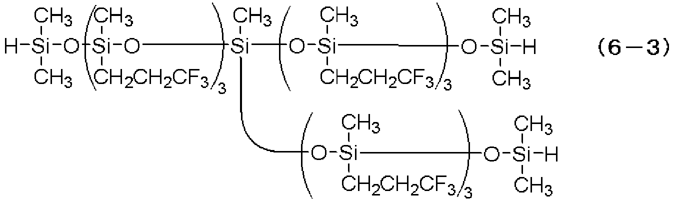
(B-4) Methylhydrogenpolysiloxane represented by the following formula (6-4) [viscosity: 0.06 Pa·s, SiH group content: 0.0049 mol/g]

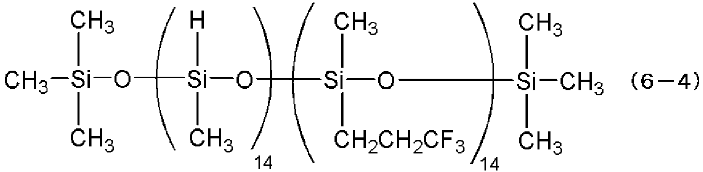

### (C) Platinum catalyst (Pt concentration: 0.5% by mass)

### (Other Components)

### Reaction control agent: Ethynylcyclohexanol

Compression set improver: Benzotriazole silane represented by the following formula (7)

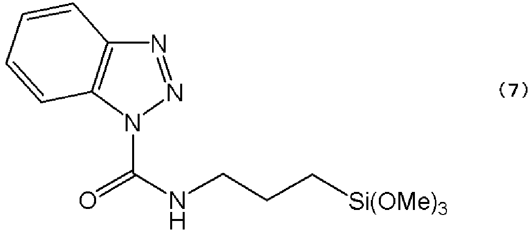

Heat resistance-imparting agent: Cerium oxide

### [Preparation Example 1]

55 parts by mass of the trifluoropropyl methyl polysiloxane (A) represented by the formula (4) [vinyl group content: 4.6 × 10⁻⁵ mol/g], 40 parts by mass of the fumed silica as a reinforcing silica filler, 6 parts by mass of the organosilicon compound represented by the formula (5), 0.5 parts by mass of water, and 0.4 parts by mass of 1,3-divinyl-1,1,3,3-tetramethyldisilazane were mixed at 25°C for 30 minutes, then the temperature was raised to 160°C, and stirring was continued for 3 hours. Further, 60 parts by mass of the trifluoropropyl methyl polysiloxane represented by formula (4) was added, followed by mixing for 30 minutes, resulting in a silicone rubber base A1. In the resulting silicone rubber base, the amount of component (D) per 100 parts by mass of component (A) is 35 parts by mass.

### [Examples 1 and 4, Comparative Examples 1 and 2]

Silicone rubber compositions were prepared in the amounts shown in Table 1 below. The viscosity of each of the resulting compositions was measured under the above conditions, and cured products were prepared and their general properties described above were determined. These results are listed in Table 1. In the row "Curability T10/T90" in the table, the 10% and 90% cure times (seconds) obtained by the above measurement method are listed, and the row "Curability T90-T10" indicates the difference between the cure times. The smaller the difference, the faster the curing. "SiH/SiVi" is the ratio of the number of SiH groups in component (B) to SiVi groups in the composition.

**[Table 1]**

| | | | Example | | | | Comparative Example | |
|---|---|---|---|---|---|---|---|---|
| | | | 1 | 2 | 3 | 4 | 1 | 2 |
| Silicone Rubber Composition | | | A | B | C | D | E | F |
| Composition | Silicon Rubber Base A1 | | 135 | 135 | 135 | 135 | 135 | 135 |
| | A | | 21 | 6.5 | 8.7 | 8.7 | 21 | 6.5 |
| | B-1 | | 1.10 | 1.43 | | | | |
| | B-2 | | | | 4.72 | | | |
| | B-3 | | | | | 3.78 | | |
| | B-4 | | | | | | 2.30 | 5.58 |
| | C | | 0.17 | 0.17 | 0.17 | 0.17 | 0.17 | 0.17 |
| | Ethynylcyclohexanol | | 0.03 | 0.03 | 0.03 | 0.03 | 0.03 | 0.03 |
| | Benzotriazole Silane | | 0.0065 | 0.0065 | 0.0065 | 0.0065 | 0.0065 | 0.0065 |
| | Cerium Oxide | | 0.25 | 0.25 | 0.25 | 0.25 | 0.25 | 0.25 |
| | SiH/SiVi | | 1.5 | 1.5 | 1.5 | 1.5 | 2.7 | 3.0 |
| General Properties | Curability T10/T90 | sec | 11/34 | 10/38 | 11/36 | 11/35 | 24/65 | 23/64 |
| | Curability T90-T10 | sec | 23 | 27 | 25 | 24 | 41 | 41 |
| | Hardness | Type-A | 30 | 38 | 35 | 35 | 49 | 60 |
| | Tensile Strength | MPa | 10.1 | 8.3 | 8.9 | 8.5 | 7.4 | 6.9 |
| | Elongation at break | % | 470 | 390 | 420 | 450 | 280 | 230 |
| | Tear Strength (angle) | kN/m | 12 | 11 | 13 | 12 | 9 | 11 |
| | Compression Set | % | 8 | 8 | 8 | 8 | 9 | 11 |

As shown in Table 1, the cured products obtained from the liquid addition-curable fluorosilicone compositions according to the first aspect of the present invention have good curability (fast curing) and excellent tensile strength and elongation at break. On the other hand, the fluorosilicone compositions of Comparative Examples 1 and 2, which used the linear silicone (B-4) having a hydrogen-modified side chain in the organosilicon compound according to the first aspect of the present invention, had poor curability (slightly slow curing) and poor mechanical strength.

The liquid addition-curable fluorosilicone composition according to the first aspect of the present invention is suitable as a material for cast molding, compression molding, and injection molding and can contribute to improved productivity of molded articles. In addition, the liquid addition-curable fluorosilicone composition according to the first aspect of the present invention has a low compression set value after heating and curing and can be suitably used for a rubber molded product such as a seal material, O-ring, or packing.

### <Examples 5 to 8, Comparative Example 3>

In Examples 5 to 8 and Comparative Example 3, the storage stability of the compositions was evaluated by the following method.

The compositions were visually observed at 30°C after 3 days or at 30°C after 7 days. Those that remained fluid and in a liquid form were evaluated as "good", and those that gelled were evaluated as "poor".

Each component used in the following Examples 5 to 8 and Comparative Example 3 is as follows.

Component (A'): Trifluoropropyl methyl polysiloxane represented by the following formula (4') [vinyl group content: 4.6 × 10⁻⁵ mol/g] with both ends capped with dimethylvinylsiloxy groups and having a viscosity at 25°C of 76.6 Pa·s

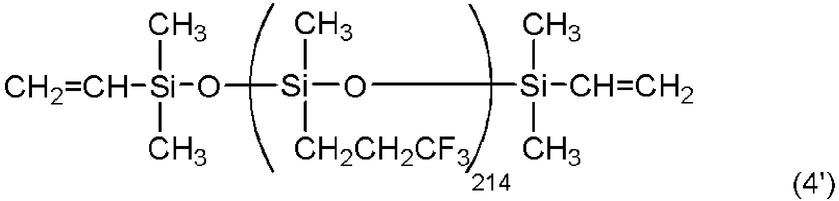

Component (D'):
Fumed silica having a specific surface area of 200 m²/g as determined by the BET method (Aerosil R-974 available from Nippon Aerosil Co., Ltd.), and
Organosilicon compound represented by the following formula (5')

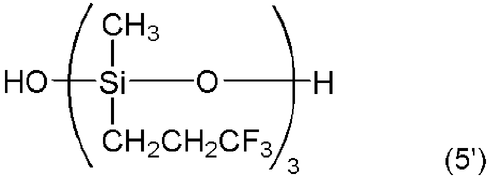

(B') Crosslinking agent:
(B'-1) Methylhydrogenpolysiloxane represented by the following formula (6-1') [SiH group content: 0.012 mol/g] 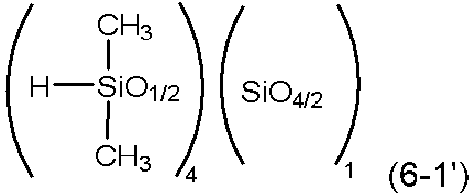
(B'-2) Methylhydrogenpolysiloxane represented by the following formula (6-2') [SiH group content: 0.0018 mol/g] 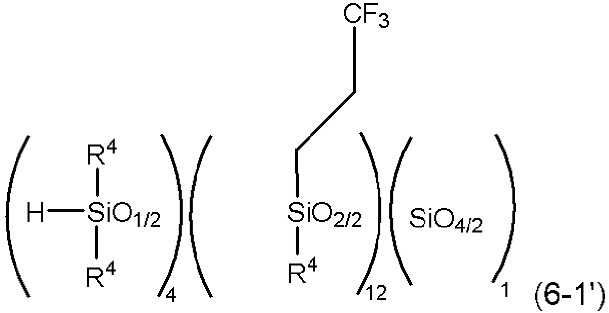
(B'-3) Methylhydrogenpolysiloxane represented by the following formula (6-3') [SiH group content: 0.0017 mol/g] 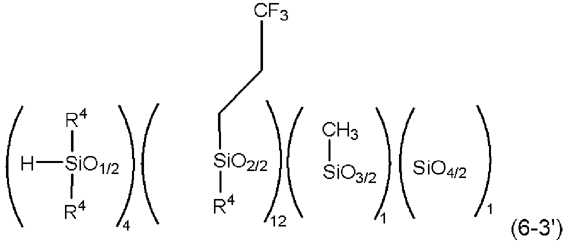
(B'-4) Methylhydrogenpolysiloxane represented by the following formula (6-4') [viscosity: 0.06 Pa s, SiH group content: 0.0049 mol/g] 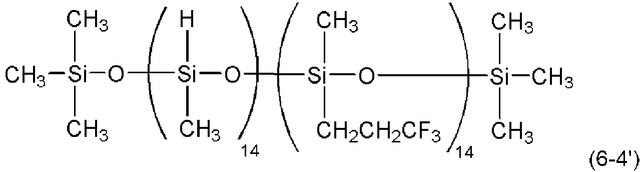
(B'-5) Crosslinking agent: Methylhydrogenpolysiloxane represented by the following formula (6-5') [SiH group content: 0.086 mol/g]

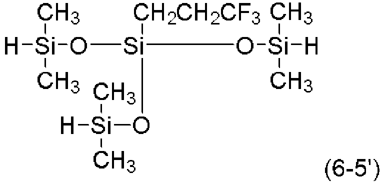

### (C') Platinum catalyst (Pt concentration: 0.5% by mass)

Other Components:
Reaction control agent: Ethynylcyclohexanol
Compression set improver: Benzotriazole silane represented by the following formula (7)

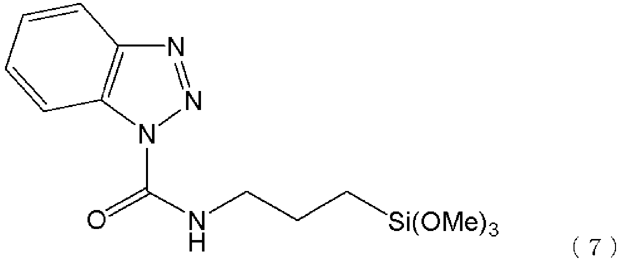

### Heat resistance-imparting agent: Cerium oxide

### [Preparation Example 2]

55 parts by mass of the trifluoropropyl methyl polysiloxane (A') represented by the formula (4') [vinyl group content: 4.6 × 10⁻⁵ mol/g], 40 parts by mass of the fumed silica as a reinforcing silica filler, 6 parts by mass of the organosilicon compound represented by the formula (5'), 0.5 parts by mass of water, and 0.4 parts by mass of 1,3-divinyl-1,1,3,3-tetramethyldisilazane were mixed at 25°C for 30 minutes, then the temperature was raised to 160°C, and stirring was continued for 3 hours. Further, 60 parts by mass of the trifluoropropyl methyl polysiloxane represented by the formula (4') was added, followed by mixing for 30 minutes, resulting in a silicone rubber base A1'. In the resulting silicone rubber base, the amount of component (D') per 100 parts by mass of component (A') is 35 parts by mass.

### [Examples 5 to 8, Comparative Example 3]

Silicone rubber compositions were prepared in the amounts shown in Table 2 below. The viscosity of each of the resulting compositions was measured under the above conditions, and cured products were prepared and their general properties described above were determined. These results are listed in Table 2.

**[Table 2]**

| | | | Example | | | Comparative Example | Example |
|---|---|---|---|---|---|---|---|
| | | | 5 | 6 | 7 | 3 | 8 |
| Silicone rubber composition | | | G | H | I | J | K |
| Composition | Silicon rubber base A1' | | 135 | 135 | 135 | 135 | 135 |
| | Component (A') | | 17 | 17 | 17 | 21 | 6.5 |
| | Component (B'-1) | | 1.82 | | | | |
| | Component (B'-2) | | | 5.4 | | | |
| | Component (B'-3) | | | | 5.7 | | |
| | Component (B'-4) | | | | | 2.30 | |
| | Component (B'-5) | | | | | | 1.43 |
| | Component (C') | | 0.17 | 0.17 | 0.17 | 0.17 | 0.17 |
| | Ethynylcyclohexanol | | 0.03 | 0.03 | 0.03 | 0.03 | 0.03 |
| | Benzotriazole silane | | 0.0065 | 0.0065 | 0.0065 | 0.0065 | 0.0065 |
| | Cerium oxide | | 0.25 | 0.25 | 0.25 | 0.25 | 0.25 |
| | SiH/SiVi | | 1.5 | 1.5 | 1.5 | 2.7 | 1.5 |
| General properties | Curability T10/T90 | sec | 7/13 | 8/16 | 8/16 | 24/65 | 10/38 |
| | Curability T90-T10 | sec | 6 | 8 | 8 | 41 | 27 |
| | Hardness | Type-A | 40 | 35 | 34 | 49 | 38 |
| | Tensile strength | MPa | 9.5 | 9.3 | 9.2 | 7.4 | 8.3 |
| | Elongation at break | % | 330 | 400 | 420 | 280 | 390 |
| | Tear strength (angle) | kN/m | 11 | 12 | 15 | 9 | 11 |
| | Compression set | % | 8 | 8 | 8 | 9 | 8 |
| Storage stability | 30°C×3 days | | Good | Good | Good | Good | Good |
| | 30°C×7 days | | Good | Good | Good | Poor | Good |

As shown in Table 2, the curability of each of the liquid addition-curable fluorosilicone compositions of Examples 5 to 7, which are examples of the second aspect of the present invention, is much faster than those of the compositions of Comparative Example 3 and Example 8, and the cured products of these compositions have more excellent tensile strength and elongation at break than those of the cured products of the compositions of Comparative Example 3 and Example 8. The curability of the liquid addition-curable fluorosilicone composition of Example 8, which is an example of the first aspect of the present invention, is faster than that of the composition of Comparative Example 3, and the cured product of the composition has more excellent tensile strength and elongation at break than those of the cured product of the composition of Comparative Example 3. On the other hand, in the fluorosilicone composition of Comparative Example 3 using a silicone which has no SiO_{4/2} unit and was obtained by hydrogen-modification of side chain of the organosilicon compound according to the second aspect of the present invention, the curability was slightly slowly, and the cured product of the composition had poor mechanical strength. Furthermore, the liquid addition-curable fluorosilicone rubber compositions of Examples 5 to 8, which are examples of the first and second aspects of the present invention, had storage stability equal to or better than that of conventional products.

In other words, the liquid addition-curable fluorosilicone composition according to the second aspect of the present invention is suitable as a material for cast molding, compression molding, and injection molding and can contribute to improved productivity of molded articles. In addition, the liquid addition-curable fluorosilicone composition according to the second aspect of the present invention has a low compression set value after heating and curing and can be suitably used for a rubber molded product such as a seal material, O-ring, or packing.

It should be noted that the present invention is not limited to the above-described embodiments. The embodiments are just examples, and any examples that substantially have the same feature and demonstrate the same functions and effects as those in the technical concept disclosed in claims of the present invention are included in the technical scope of the present invention.

## Claims

1. An addition-curable fluorosilicone composition comprising:
(A) a vinyl group-containing organopolysiloxane represented by the following general formula (1) and having a viscosity at 25°C of 100 to 500,000 mPa·s, 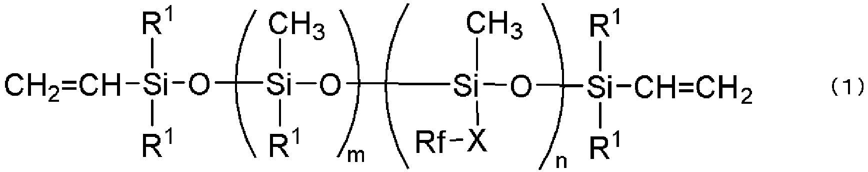 wherein R¹ is, independently of each other, a group selected from an alkyl group having 1 to 8 carbon atoms, an aryl group having 6 to 12 carbon atoms, and an aralkyl group having 7 to 12 carbon atoms; Rf is, independently of each other, a group selected from a perfluoroalkyl group having 1 to 10 carbon atoms and a perfluoropolyether group having 3 to 30 carbon atoms; X is a divalent organic group; m is an integer of 0 to 100; and n is an integer of 1 to 800, provided that 5 ≤ m + n ≤ 800;
(B) a branched organohydrogenpolysiloxane represented by the following formula (3) and having three or more silicon-bonded hydrogen atoms per molecule, 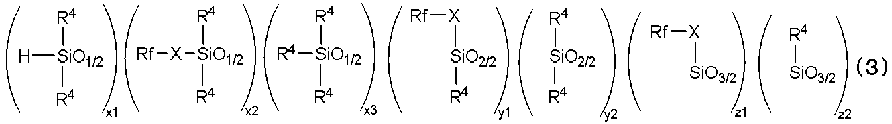 wherein R⁴ is, independently of each other, a group selected from an alkyl group having 1 to 8 carbon atoms, an aryl group having 6 to 12 carbon atoms, and an aralkyl group having 7 to 12 carbon atoms; Rf is, independently of each other, a group selected from a perfluoroalkyl group having 1 to 10 carbon atoms and a perfluoropolyether group having 3 to 30 carbon atoms; X is a divalent organic group; x1 is a number that satisfies 2 ≤ x1 ≤ 4; x2 is an integer that satisfies 0 ≤ x2 ≤ 20; x3 is an integer that satisfies 0 ≤ x3 ≤ 20; 0 ≤ x2 + x3 ≤ 20 is satisfied; y1 is an integer that satisfies 0 ≤ y1 ≤ 30; z1 is an integer that satisfies 0 ≤ z1 ≤ 10; y2 is an integer that satisfies 0 ≤ y2 ≤ 30; z2 is an integer that satisfies 0 ≤ z2 ≤ 10; and z1 + z2 > 0,
in such an amount that a number of hydrogen atoms bonded to silicon atoms in component (B) is 0.5 to 10 per silicon-bonded vinyl group in the composition;
(C) an addition reaction catalyst in a catalytic amount; and
(D) a reinforcing silica filler surface-treated with an organosilicon compound represented by the following general formula (2), 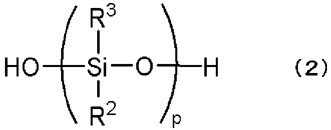 wherein R³ is, independently of each other, a group selected from an alkyl group having 1 to 8 carbon atoms, an aryl group having 6 to 12 carbon atoms, and an aralkyl group having 7 to 12 carbon atoms; R² is, independently of each other, a group defined for R³ or a 3,3,3-trifluoropropyl group, provided that at least one R² is a 3,3,3-trifluoropropyl group; and p is an integer that satisfies 1 ≤ p ≤ 20,
in an amount of 10 to 60 parts by mass per 100 parts by mass of component (A),
wherein the addition-curable fluorosilicone composition is in a liquid form at 23°C.

2. A fluorosilicone rubber comprising a cured product of the addition-curable fluorosilicone composition according to claim 1.

3. A fluorosilicone rubber molded article comprising a molded product of the fluorosilicone rubber according to claim 2.

4. A liquid addition-curable fluorosilicone composition in a liquid form at 23°C, comprising:
(A') an alkenyl group-containing organopolysiloxane represented by the following general formula (1A) and having a viscosity at 25°C of 100 to 500,000 mPa·s, 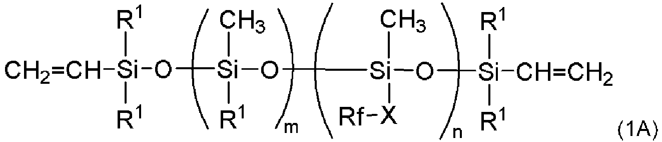 wherein R¹ is, independently of each other, a group selected from an alkyl group having 1 to 8 carbon atoms, an aryl group having 6 to 12 carbon atoms, and an aralkyl group having 7 to 12 carbon atoms; Rf is, independently of each other, a group selected from a perfluoroalkyl group having 1 to 10 carbon atoms and a perfluoropolyether group having 3 to 30 carbon atoms; X is a divalent organic group; m is an integer of 0 to 100; and n is an integer of 1 to 800, provided that 5 ≤ m + n ≤ 800;
(B') an organohydrogenpolysiloxane represented by the following general formula (2A) and having three to five silicon-bonded hydrogen atoms per molecule, 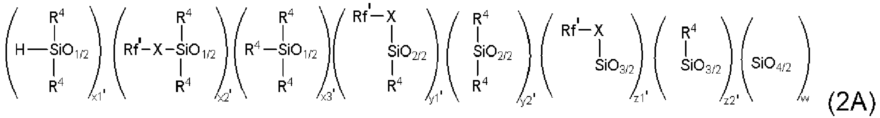 wherein R⁴ is, independently of each other, a group selected from an alkyl group having 1 to 8 carbon atoms, an aryl group having 6 to 12 carbon atoms, and an aralkyl group having 7 to 12 carbon atoms; Rf' is, independently of each other, a group selected from a perfluoroalkyl group having 1 to 10 carbon atoms and a perfluoropolyether group having 3 to 30 carbon atoms; X is a divalent organic group; x1' is an integer that satisfies 3 ≤ x1' ≤ 5; x2' and x3' are each an integer that satisfies 0 ≤ x2' + x3' ≤ 20; y1' is an integer that satisfies 0 ≤ y1' ≤ 30; y2' is an integer that satisfies 0 ≤ y2' ≤ 30; z1' is an integer that satisfies 0 ≤ z1' ≤ 10; z2' is an integer that satisfies 0 ≤ z2' ≤ 10; and w satisfies 0 < w ≤ 10, provided that x2', x3', y1', y2', z1', and z2' are not zero at the same time, in such an amount that a number of hydrogen atoms bonded to silicon atoms in component (B') is 0.5 to 10 per silicon-bonded alkenyl group in the composition;
(C') an addition reaction catalyst in a catalytic amount; and
(D') a reinforcing silica filler surface-treated with an organosilicon compound represented by the following general formula (3A), 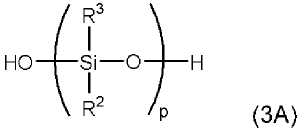 wherein R³ is, independently of each other, a group selected from an alkyl group having 1 to 8 carbon atoms, an aryl group having 6 to 12 carbon atoms, and an aralkyl group having 7 to 12 carbon atoms; R² is, independently of each other, a group defined for R³ or a 3,3,3-trifluoropropyl group, provided that at least one R² is a 3,3,3-trifluoropropyl group; and p is an integer that satisfies 1 ≤ p ≤ 20,
in an amount of 10 to 60 parts by mass per 100 parts by mass of component (A').

5. A fluorosilicone rubber comprising a cured product of the addition-curable fluorosilicone composition according to claim 4.
